# EUROPEAN PATENT SPECIFICATION

(11) **EP 2 302 408 B1**
(45) Date of publication and mention of the grant of the patent: **27.02.2013**
(21) Application number: 09170494.0
(22) Date of filing: 17.09.2009
(51) Int. Cl.: G01S 7/40, G01S 7/41, G01S 13/34, G01S 13/88

(54) **A method for detecting an object with an FMCW ranging system**
Verfahren zur Detektion eines Objekts mit einem FMCW-Entfernungsmesssystem
Procédé de détection d'un objet avec un système de mesure FMCW

(43) Date of publication of application: 30.03.2011
(73) Proprietor: Siemens Aktiengesellschaft, 80333 München (DE)
(72) Inventor: Larocque, Jean-René, Dr., Peterborough, ON K9J 8E1 (CA); Shenouda, Michael, Hamilton L8S 2G5 (CA)
(74) Representative: Maier, Daniel Oliver

(56) References cited:
- GB-A- 2 350 004
- US-A- 5 252 981
- US-A- 6 107 957
- US-A1- 2005 001 761

## Description

The invention relates to a method for detecting an object with an FMCW (frequency modulated continuous wave) ranging system comprising:
transmitting a transmit signal towards the object, receiving a receive signal caused by reflections of the transmit signal, calculating a frequency difference signal of the transmit signal and the receive signal, determining a frequency spectrum of the frequency difference signal and analyzing the frequency spectrum in order to determine a frequency which is related to the object to be detected.

Such a method is known from US 2005/001761 A1, GB 2 350 004 A, US 6 107 957 or US 5 252 981 A.

FMCW ranging systems may be sound or microwave based and are used for distance or level measurement in industrial process control, factory automation or automotive applications.

The transmit signal is modulated to periodically sweep over a predetermined frequency range. The receive signal, which comprises echo signal portions from the object of interest and other obstacles, is mixed with the transmit signal and the result is analyzed by, e.g., the Fast Fourier Transform (FFT) to obtain a frequency spectrum in which the echoes appear as peaks. The echoes or peaks in the frequency spectrum (also referred to as echo profile) may be separate or may overlap.

When, for example, measuring the level of material within a closed vessel, the echo from the material is often distorted by echoes from other scatterers such as obstacles, welded seams etc. The distortion in the echo introduces error in the level being reported when the echo from the material is close to an echo from an obstacle. The echoes from scatterers often overlap the main echo and there is not clear discrimination between them. This is an intrinsic limitation of FMCW ranging systems.

Radar devices operating in enclosed vessels usually have a wide bandwidth to achieve high resolution, i.e. the ability to resolve two targets. However, to operate in open air, the bandwidth is governed by other set of rules, such as those of the Federal Communications Commission (FCC) in the U.S., and it is generally limited to a much narrower width. A narrower bandwidth, however, will cause the frequency difference between two targets to be smaller. It also entails that the peaks on the echo profile will be much wider. The combination of those two factors reduces greatly the ability of the device to operate in open air and still achieve reasonable accuracy or ranging resolution.

The most commonly applied technique to identify the echo of interest relies on the power spectrum density (PSD), usually calculated by FFT, to estimate the frequency of interest as the frequency corresponding to the largest component of the FFT-PSD. Because of the sampled nature, the largest component of the PSD may not be the peak of the true spectrum or the true peak of interest whose accurate position can then be estimated by using a center of mass algorithm about the largest component in the power spectrum.

The FFT and the estimation based on power spectrum discard a lot of information and limit the separation power of current FMCW devices.

It is therefore an object of the invention to present a new approach to detecting an object with an FMCW ranging system that achieves superior accuracy and resolution without the need to increase the bandwidth.

According to the invention this object is achieved for the method of the initially mentioned type in that the step of analyzing the frequency spectrum comprises:
a) determining the strongest sinusoidal component in the frequency spectrum and removing the determined component from the spectrum,
b) repeating the preceding step at least once,
c) adding one of the components determined in the two preceding steps to the spectrum, re-determining the then strongest sinusoidal component in the spectrum and removing the re-determined component from the spectrum,
d) repeating the preceding step for each remaining of the determined sinusoidal components, and
e) repeating the last two steps until a desired degree of convergence is reached.

The method according to the invention is based on the assumption that in most measuring situations there will be only a few targets which produce significant echoes. For example, measuring the level of material within a tank will typically produce one clear echo from the material or two significant echoes from the material and a fixed obstacle or the tank bottom. For that reason, the proposed algorithm iteratively estimates relevant parameters such as amplitude, frequency and phase of these few strongest sinusoidal components present in the frequency spectrum until some measure of convergence is achieved. This iterative approach allows for the refinement of poor first initial estimates. In a recursive algorithm that does not re-estimate the parameters of the first sinusoidal component, initial errors might propagate. The iterative approach according to the invention advantageously avoids this problem.

The frequency spectrum is preferably determined by Fast Fourier Transformation (FFT). However there are many other techniques that can be used, including autoregressive (AR), autoregressive moving average (ARMA), minimum-entropy methods and spectral-parameter estimation including multiple signal classification (MUSIC) algorithm.

In a preferred embodiment of the invention, the analysis of the frequency spectrum is limited to a window around an expected value of the frequency related to the object to be detected. As echoes outside the window are discarded from the analysis, the number of echoes to be considered is reduced and so is the number of different sinusoidal components to be estimated. At best, there will be only at most two significant echoes to be considered; for example, the main echo from the object of interest and an interfering echo from its surroundings.

Additionally or alternatively, the frequency spectrum is, prior to the analysis, band-pass filtered around an or the expected value of the frequency related to the object to be detected, thus attenuating unwanted echoes, such as those coming from internal mismatch and multiple echoes of the measurement environment.

The expected value of the frequency related to the object may be estimated without the window in a measuring situation when the echo of interest is the only one or clearly distinguishable from other echoes, or when the position of the object is known, e.g. the tank is empty. Once the frequency related to the object is detected, the expected value of the frequency may be replaced by the determined frequency related to the object and tracked in subsequent detection cycles.

The method according to the invention is preferably used for level measurement and with a radar-based FMCW range system.

## Claims

1. A method for detecting an object with an FMCW (frequency modulated continuous wave) ranging system comprising:
transmitting a transmit signal towards the object, receiving a receive signal caused by reflections of the transmit signal, calculating a frequency difference signal of the transmit signal and the receive signal, determining a frequency spectrum of the frequency difference signal and analyzing the frequency spectrum in order to determine a frequency related to the object to be detected,
**characterized in that** analyzing the frequency spectrum comprises the steps of:
a) determining the strongest sinusoidal component in the frequency spectrum and removing the determined component from the spectrum,
b) repeating the preceding step at least once,
c) adding one of the components determined in the two preceding steps to the spectrum, re-determining the then strongest sinusoidal component in the spectrum and removing the re-determined component from the spectrum,
d) repeating the preceding step for each remaining of the determined sinusoidal components, and
e) repeating the last two steps until a desired degree of convergence is reached.

2. The method of claim 1, wherein the frequency spectrum is determined by Fast Fourier Transformation (FFT).

3. The method of claim 1 or 2, wherein the analysis of the frequency spectrum is limited to a window around an expected value of the frequency related to the object to be detected.

4. The method of one of the preceding claims, wherein, prior to the analysis, the frequency spectrum is band-pass filtered around an or the expected value of the frequency related to the object to be detected.

5. The method of claim 3 or 4, wherein, once the frequency related to the object is detected, the expected value of the frequency is replaced by the determined frequency related to the object and tracked in subsequent detection cycles.

6. The method of one of the preceding claims for level measurement in a container.

7. The method of one of the preceding claims by using a radar-based FMCW range system.

## Patentansprüche

1. Verfahren zum Detektieren eines Objekts mit einem FMCW(Frequency Modulated Continuous Wave)-Entfernungsbestimmungssystem, umfassend:
Senden eines Sendesignals zu dem Objekt, Empfangen eines durch Reflektionen des Sendesignals verursachten Empfangssignals, Berechnen eines Frequenzdifferenzsignals des Sendesignals und des Empfangssignals, Bestimmen eines Frequenzspektrums des Frequenzdifferenzsignals und Analysieren des Frequenzspektrums, um eine Frequenz zu bestimmen, die mit dem zu detektierenden Objekt in Beziehung steht,
**dadurch gekennzeichnet, dass** das Analysieren des Frequenzspektrums die folgenden Schritte umfasst:
a) Bestimmen der stärksten sinusförmigen Komponente in dem Frequenzspektrum und Entfernen der bestimmten Komponente aus dem Spektrum,
b) mindestens einmaliges Wiederholen des vorhergehenden Schritts,
c) Addieren einer der in den beiden vorhergehenden Schritten bestimmten Komponenten zu dem Spektrum, Neubestimmen der dann stärksten sinusförmigen Komponente in dem Spektrum und Entfernen der neubestimmten Komponente aus dem Spektrum,
d) Wiederholen des vorhergehenden Schritts für jede übrige der bestimmten sinusförmigen Komponenten und
e) Wiederholen der letzten zwei Schritte, bis ein gewünschter Konvergenzgrad erreicht wird.

2. Verfahren nach Anspruch 1, wobei das Frequenzspektrum durch schnelle Fouriertransformation (FFT) bestimmt wird.

3. Verfahren nach Anspruch 1 oder 2, wobei die Analyse des Frequenzspektrums auf ein Fenster um einen erwarteten Wert der mit dem zu detektierenden Objekt in Beziehung stehenden Frequenz begrenzt wird.

4. Verfahren nach einem der vorhergehenden Ansprüche, wobei das Frequenzspektrum vor der Analyse um einen oder den erwarteten Wert der mit dem zu detektierenden Objekt in Beziehung stehenden Frequenz bandpassgefiltert wird.

5. Verfahren nach Anspruch 3 oder 4, wobei, nachdem die mit dem Objekt in Beziehung stehende Frequenz detektiert ist, der erwartete Wert der Frequenz durch die mit dem Objekt in Beziehung stehende bestimmte Frequenz ersetzt und in nachfolgenden Detektionszyklen verfolgt wird.

6. Verfahren nach einem der vorhergehenden Ansprüche zur Füllstandsmessung in einem Behälter.

7. Verfahren nach einem der vorhergehenden Ansprüche durch Verwendung eines auf Radar basierenden FMCW-Entfernungssystems.

## Revendications

1. Procédé de détection d'un objet par un système de télémétrie FMCW ( onde continue modulé en fréquence ) dans lequel : on émet un signal d'émission vers l'objet, on reçoit un signal de réception provoqué par des réflexions du signal d'émission, on calcule un signal de différence de fréquence entre le signal d'émission et le signal de réception, on détermine un spectre de fréquence du signal de différence de fréquence et on analyse le spectre de fréquence afin de déterminer une fréquence en relation avec l'objet à détecter, **caractérisé en ce qu'**analyser le spectre de fréquence comprend les stades dans lesquels :
a) on détermine la composante sinusoïdale la plus forte du spectre de fréquence et on supprime du spectre la composante déterminée,
b) on répète le stade précédent au moins une fois,
c) on ajoute au spectre l'une des composantes déterminées dans les deux stades précédents, on redétermine ensuite la composante sinusoïdale la plus forte du spectre et on supprime du spectre la composante redéterminée,
d) on répète le stade précédent pour chacune des composantes sinusoïdales déterminées restantes, et
e) on répète les deux derniers stades jusqu'à obtenir un degré souhaité de convergence.

2. Procédé suivant la revendication 1, dans lequel on détermine le spectre de fréquence par la transformation de Fourier Rapide ( TFF ).

3. Procédé suivant la revendication 1 ou 2, dans lequel on limite l'analyse du spectre de fréquence à une fenêtre autour d'une valeur escomptée de la fréquence en relation avec l'objet à détecter.

4. Procédé suivant l'une des revendications précédentes, dans lequel, avant l'analyse, le spectre de fréquence est une bande passante filtrée autour de la valeur escomptée de la fréquence en relation avec l'objet à détecter ou est cette valeur escomptée.

5. Procédé suivant la revendication 3 ou 4, dans lequel, une fois que la fréquence en relation avec l'objet est détectée, on remplace la valeur escomptée de la fréquence par la fréquence déterminée en relation avec l'objet et on la suit dans des cycles de détection venant ensuite.

6. Procédé suivant l'une des revendications précédentes pour la mesure d'un niveau dans un récipient.

7. Procédé suivant l'une des revendications précédentes en utilisant un système de télémétrie OCNF basé sur un radar.
